# EUROPÄISCHE PATENTANMELDUNG

(11) **EP 1 398 693 A2**
(43) Veröffentlichungstag der Anmeldung: **17.03.2004**
(21) Anmeldenummer: 03012657.7
(22) Anmeldetag: 04.06.2003
(51) Int. Cl.: G06F 9/445

(54) **Vorrichtung zu einer benutzergesteuerten Veränderung des Arbeitsprogrammes eines in einem Fernsehempfänger angeordneten Mikroprozessors**

(30) Priorität: 06.06.2002 DE 10225031
(71) Anmelder: GRUNDIG Aktiengesellschaft, 90471 Nürnberg (DE)
(72) Erfinder: Payer, Wolfgang, 91448 Emskirchen (DE); Finsterer, Harald, 90461 Nürnberg (DE)

(57) **Zusammenfassung**

Die Erfindung betrifft eine Vorrichtung mit einem Fernsehempfänger, welcher als zentrale Steuereinheit einen Mikroprozessor aufweist. Dieser ist mit einem nichtflüchtigen Arbeitsprogrammspeicher verbunden, in welchem das Arbeitsprogramm des Mikroprozessors abgespeichert ist. Weiterhin sind Benutzereingabemittel vorgesehen, mittels welcher eine benutzergesteuerte Veränderung des Arbeitsprogramms des Mikroprozessors durchführbar ist. Das Arbeitsprogramm besteht aus einzelnen Modulen. Zusätzliche Arbeitsprogramm-Module können über das Internet heruntergeladen oder vom Benutzer selbst erstellt werden. Weiterhin können im Fernsehempfänger Makros abgespeichert sein. Auch diese können vom Benutzer umprogrammiert oder durch vom Benutzer selbst erstellte Makros ersetzt oder ergänzt werden.

## Beschreibung

Die Erfindung betrifft eine Vorrichtung zu einer benutzergesteuerten Veränderung des Arbeitsprogrammes eines in einem Fernsehempfänger angeordneten Mikroprozessors.

Aus der US 6,331,876 B1 ist bereits ein Verfahren zu einem Software-Update eines Fernsehempfängers bekannt. Gemäß diesem Verfahren wird die neue Software, die zum Ersatz bereits vorhandener Software vorgesehen ist, blockweise über eine Rundfunkübertragungsstrecke übertragen. Die übertragenen Softwareblöcke werden im Fernsehempfänger aus dem übertragenen Signal abgetrennt und in einem Speicher des Fernsehempfängers zwischengespeichert. Erst nachdem die komplette, eine Vielzahl von Blöcken aufweisende neue Software zwischengespeichert ist, wird sie zum Ersatz der bereits vorhandenen Software in den nichtflüchtigen Arbeitsprogrammspeicher des Fernsehempfängers übertragen. Durch dieses Vorgehen wird ein nur teilweises Erneuern der Software im Falle des Auftretens einer unerwünschten Unterbrechung des Update-Vorgangs vermieden.

Weiterhin ist aus der EP 0 993 183 A2 ein Verfahren zu einem Software-Update eines Fernsehempfängers bekannt, bei welchem die neue Software in einem digitalen MPEG-Datenstrom übertragen, in einem Datenspeicher des Fernsehempfängers zwischengespeichert und dann in den nichtflüchtigen Arbeitsprogrammspeicher des Fernsehempfängers übertragen wird.

Demgegenüber bestehen die Vorteile der Erfindung darin, dass die erfindungsgemäße Veränderung des Arbeitsprogrammes des Mikroprozessors nicht nur vom Benutzer eingeleitet wird, sondern auch benutzergesteuert durchgeführt wird.
Diese Benutzersteuerung bei der Veränderung des Arbeitsprogrammes des Mikroprozessors kann darin bestehen, dass der Benutzer aus vom Gerätehersteller angebotenen Arbeitsprogramm-Modulen gewünschte Module auswählt und zum Ersatz oder zur Ergänzung bereits vorhandener Module verwendet. Der Zugriff auf die vom Gerätehersteller angebotenen Arbeitsprogramm-Module kann beispielsweise über das Internet erfolgen.

Weiterhin kann die Benutzersteuerung bei der Veränderung des Arbeitsprogrammes des Mikroprozessors darin bestehen, dass der Benutzer Arbeitsprogramm-Module selbst erstellt und in den Arbeitsprogrammspeicher überträgt. Dieses benutzerseitige Erstellen von Arbeitsprogramm-Modulen kann mittels eines an den Fernsehempfänger angeschlossenen Personal-Computers durchgeführt werden. Dabei werden die den erstellten Arbeitsprogramm-Modulen entsprechenden Daten mittels der Bedientastatur des Personal-Computers eingegeben und nach Fertigstellung der Module über eine Schnittstelle zwischen dem Personal-Computer und dem Fernsehempfänger an den Fernsehempfänger übertragen und in dessen Arbeitsprogrammspeicher abgelegt.

Alternativ dazu kann das benutzerseitige Erstellen von Arbeitsprogramm-Modulen auch unter Verwendung der Bedieneinheit des Fernsehempfängers erfolgen, insbesondere eines Fernbedienungsgebers. Dabei werden vorzugsweise Benutzerdialogseiten verwendet, die auf dem Display des Fernsehempfängers angezeigt werden.

Eine weitere Ausgestaltung der Erfindung besteht darin, dass der Benutzer, bei dem es sich sowohl um einen technisch versierten Endkunden als auch um einen Fachhändler handeln kann, bereits vorhandene Arbeitsprogramm-Module unter Verwendung eines Personal-Computers oder der Bedieneinheit des Fernsehempfängers auf gewünschte Weise modifiziert.

Gemäß einer vorteilhaften Weiterbildung der Erfindung weist der Fernsehempfänger einen Hintergrundspeicher auf, in welchem automatisch vor jeder Veränderung des Inhalts des Arbeitsprogrammspeichers der Komplettinhalt des Arbeitsprogrammspeichers abgespeichert wird. Dies hat den Vorteil, dass im Falle einer Erstellung fehlerhafter neuer Arbeitsprogramm-Module, die im Gerätebetrieb zu Fehlern führen, wieder auf die im Hintergrundspeicher abgelegte funktionsfähige vorherige Version des Arbeitsprogrammes zurückgegriffen werden kann.

In vorteilhafter Weise ist jedes vom Gerätehersteller gelieferte Arbeitsprogramm-Modul mit einer Versionsnummer versehen. Dies eröffnet die Möglichkeit, in Form einer Auflistung auf dem Bildschirm oder in Form eines Ausdruckes über einen an eine Schnittstelle des Fernsehempfängers angeschlossenen Drucker eine Übersicht über die momentan im Arbeitsprogrammspeicher enthaltenen Arbeitsprogramm-Module zu erhalten. Dadurch können eventuelle Inkompatibilitäten zwischen verschiedenen Arbeitsprogramm-Modulen erkannt werden. Derartige Inkompatibilitäten können beispielsweise dadurch entstehen, dass ein Benutzer über das Internet ein vom Gerätehersteller angebotenes Arbeitprogramm-Modul herunterlädt und im Arbeitsprogrammspeicher des Fernsehempfängers hinterlegt, welches für seinen Fernsehempfänger nicht geeignet ist.

Das Erkennen derartiger Inkompatibilitäten und anderer Fehler des Fernsehempfängers kann auch online erfolgen, wenn der Fernsehempfänger mit dem Gerätehersteller oder einer Fachwerkstatt online verbunden ist, so dass der Gerätehersteller bzw. die Fachwerkstatt die Möglichkeit hat, mit dem Mikroprozessor des Fernsehempfängers in Dialog zu treten und sich Informationen über die Speicherinhalte des Fernsehempfängers zu beschaffen.

Eine vorteilhafte Weiterbildung der Erfindung besteht darin, den Fernsehempfänger auch mit einem Makrospeicher und einem Makrospracheninterpreter auszustatten. Im Makrospeicher abgelegte Makros können bereits werkseitig erstellt werden. Ferner kann der Benutzer auch eigene Makros erstellen und in den Makrospeicher übertragen. Dies kann unter Verwendung von Benutzerdialogseiten geschehen, die auf dem Display dargestellt werden und eine Übersicht über bereits im Makrospeicher enthaltene Makros gibt.

Weitere Vorteile der Erfindung ergeben sich aus deren nachfolgender beispielhafter Erläuterung anhand der Figuren. Es zeigt:
- Figur 1: ein Blockschaltbild eines ersten Ausführungsbeispiels für die Erfindung und
- Figur 2: ein Blockschaltbild eines zweiten Ausführungsbeispiels für die Erfindung.

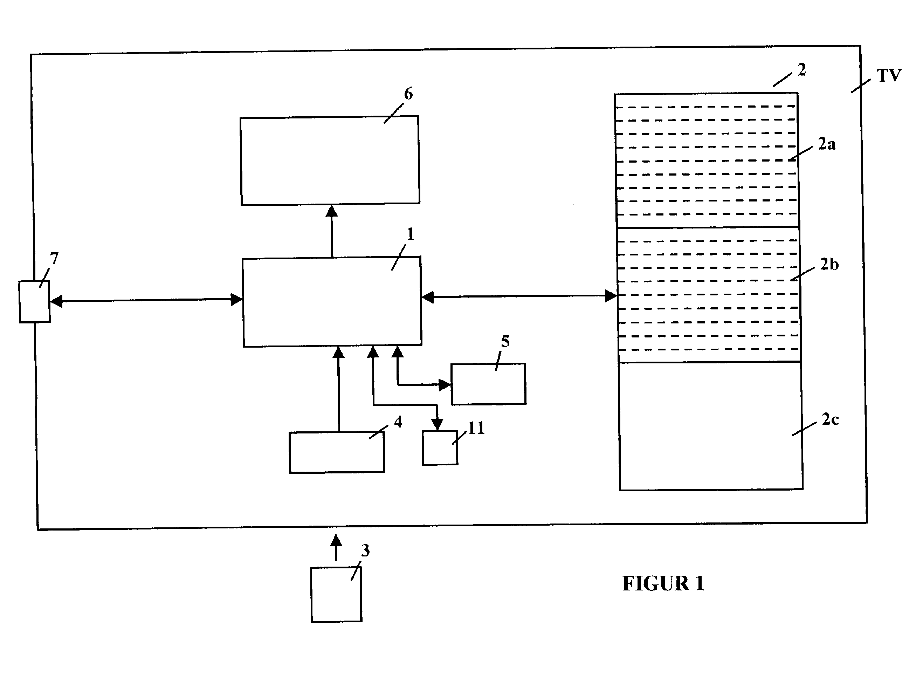

Die Figur 1 zeigt ein Blockschaltbild eines ersten Ausführungsbeispiels für die Erfindung. Die in dieser Figur dargestellte Vorrichtung weist einen Fernsehempfänger TV auf. Dieser enthält als zentrale Steuereinheit einen Mikroprozessor 1, dessen Arbeitsprogramm in einem nichtflüchtigen Arbeitsprogrammspeicher 2 abgespeichert ist. Weiterhin ist der Mikroprozessor 1 mit einem als Arbeitsspeicher dienenden RAM 5 verbunden. Zur Bedienung des Fernsehempfängers ist eine Fernbedienung 3 vorgesehen. Die von dieser ausgestrahlten Infrarot-Befehlssignale werden von einem Infrarot-Fernbedienempfänger 4 empfangen und an den Mikroprozessor 1 weitergeleitet. Ferner weist der gezeigte Fernsehempfänger als Anzeigeeinheit ein Display 6 auf. Am Gehäuse des Fernsehempfängers TV ist eine bidirektionale Schnittstelle 7 vorgesehen, bei der es sich um einen ISDN-Telefonanschluss handelt. Über diesen ISDN-Telefonanschluss hat der Fernsehempfänger Kontakt mit dem Internet und kann über dieses unter anderem auf die Homepage des Herstellers seines Fernsehgerätes und auf die Homepage eines Fachhändlers zugreifen.

Der Arbeitsprogrammspeicher 2 des Fernsehempfängers weist drei Speicherteile auf. Der erste Speicherteil 2a weist eine Vielzahl von Speicherbereichen auf und ist ein vorprogrammierter Teil des Arbeitsprogrammspeichers. In diesem sind bereits werkseitig erstellte Arbeitsprogramm-Module abgespeichert, die das komplette Arbeitsprogramm des Mikroprozessors 1 zum Zeitpunkt der Geräteauslieferung enthalten. Der Speicherteil 2b weist ebenfalls eine Vielzahl von Speicherbereichen auf, die zum Zeitpunkt der Geräteauslieferung nicht belegt sind. Die Speicherbereiche dieses zweiten Speicherteils 2b können zu beliebigen Zeiten nach der Geräteauslieferung mit zusätzlichen Arbeitsprogramm-Modulen belegt werden, wie unten noch erläutert wird. Der dritte Speicherteil 2c ist ein Makrospeicher, in welchem Makros entsprechende Makrobefehle abgespeichert sind. Diese Makros können werksseitig erstellte Makros sein oder auch Makros, die vom Benutzer nach der Geräteauslieferung selbst erstellt wurden. Unter einem Makro ist dabei eine Folge einzelner, in einer bestimmten Programmiersprache erstellter Befehle zu verstehen, die zu einem einzigen Befehl zusammengefasst sind.

Beispielsweise kann das Einschaltverhalten des Fernsehempfängers in Form eines vom Benutzer selbst erstellten Makros hinterlegt sein. Dieses durch das Makro definierte Einschaltverhalten des Fernsehempfängers kann darin bestehen, dass als Reaktion auf ein Einschalten des Fernsehempfängers mittels der Netztaste unter Steuerung durch den Mikroprozessor automatisch der dem Sender DSF entsprechende Fernsehkanal eingestellt wird, dann eine automatische Umschaltung in den Fernsehtextbetrieb erfolgt und danach automatisch die Fernsehtextseite 222 angewählt wird, auf welcher die aktuellen Spielstände der Fußballbundesliga angezeigt werden. Zur Ausführung dieses Makros liest der Mikroprozessor nach dem Einschalten des Fernsehempfängers die dem Makro entsprechenden Daten aus dem Makrospeicher 2c aus, interpretiert diese im Sinne eines Makrospracheninterpreters und setzt die im Makro enthaltenen Befehle in Steuersignale für die den jeweiligen Befehl ausführenden Bauteile um. Beim vorstehenden Beispiel sind dies Steuersignale für die Empfangseinheit, die auf den dem Fernsehsender DSF entsprechenden Kanal umschaltet, Steuersignale für die zur Umschaltung in den Fernsehtextbetrieb vorgesehene Schalteinheit und Steuersignale für den Fernsehtextdecoder zum Separieren und Decodieren der der Fernsehtextseite 222 entsprechenden Fernsehtextdaten.

Ein weiteres Makro kann beispielsweise das Ausschaltverhalten des Fernsehempfängers definieren. Beispielsweise kann gemäß diesem Makro nach der Eingabe eines Ausschaltbefehls vor dem tatsächlichen Ausschalten noch ein Werbespot am Display dargestellt werden und am Ende des Werbespots ein Ausblenden in Form eines sich von außen nach innen ausdehnenden schwarzen Vorhangs erfolgen.

Ein weiteres Makro kann das Verhalten des Fernsehempfängers beim Ausstrahlen einer jugendgefährdenden Sendung definieren. Erkennt der Mikroprozessor anhand eines zusammen mit dem Fernsehsignal übertragenen Kennbits das Vorliegen einer jugendgefährdenden Sendung, dann liest er aus dem Makrospeicher das zugehörige Makro aus und setzt dieses im Sinne eines Makrospracheninterpreters in ausführbare Befehle um. Beispielsweise kann in diesem Fall automatisch ein erhobener Zeigefinger in Form einer Graphik als Warnsignal am Display eingeblendet werden und dann nach fünf Sekunden eine automatische Kanalumschaltung des Fernsehgerätes auf einen anderen vorgegebenen Kanal erfolgen, beispielsweise den Kinderkanal.

Ein Makro kann auch das Verhalten des Fernsehempfängers betreffen, wenn die Dauer seit der letzten Betätigung der Bedieneinheit eine vorgegebene Zeitdauer überschreitet. In diesem Fall kann beispielsweise die Einblendung eines Warnsignals erfolgen mit der Aufforderung an den Benutzer, eine beliebige Taste der Bedieneinheit innerhalb der nächsten fünf Minuten zu betätigen. Geschieht dies nicht, dann erfolgt gemäß diesem Makro ein automatisches Ausschalten des Fernsehgerätes.

Vorzugsweise werden derartige Makros bereits beim Gerätehersteller erstellt und werkseitig im Sinne einer Vorprogrammierung im Makrospeicher 2c hinterlegt. Der Benutzer kann einen Überblick über die im Makrospeicher 2c hinterlegten Makros durch Betätigung einer Taste des Fernbedienungsgebers 3 erhalten, wodurch die Darstellung einer die abgespeicherten Makros enthaltenden Liste bzw. Tabelle auf dem Display 6 ausgelöst wird. In vorteilhafter Weise hat der Benutzer die Möglichkeit, die vorhandenen Makros durch von ihm selbst erstellte weitere Makros zu ergänzen, vorhandene Makros zu löschen und vorhandene Makros unter Verwendung der Fernbedienung 3 zu überarbeiten.

Im Rahmen der Überarbeitung des Ausschaltmakros kann beispielsweise als zusätzlicher Befehl in dieses Makro aufgenommen werden, das vor der endgültigen Ausschaltung des Fernsehempfängers nochmals kurz die aktuelle Uhrzeit am Display dargestellt wird.

Weitere Makros betreffen beispielsweise Programmfolgen, Demo-Programme, Diashows, Filmeffekte, Zeit- und Ereignissteuerungen und komplexe, immer wiederkehrende Bedienungsabläufe im normalen Fernsehbetrieb, im Teletextbetrieb und im Onlinebetrieb des Fernsehempfängers.

Zur Unterstützung des Benutzers bei der Einrichtung, Veränderung und Löschung von Makros werden automatisch oder nach Aufruf im Sinne einer Bildschirmeinblendung befehlsbezogene Hilfesignale dargestellt, beispielsweise als Double-Window-Darstellung. Ferner werden zur Unterstützung des Benutzers Benutzerdialogseiten auf dem Bildschirm dargestellt. Beispielsweise werden dem Benutzer auf einer ersten Benutzerdialogseite als mögliche Befehle _{"}Makroübersicht anzeigen", _{"}Makro ausführen", _{"}Makro löschen" und _{"}Makro editieren" angezeigt. Wählt der Benutzer auf dieser ersten Benutzerdialogseite den Befehl _{"}Makoübersicht anzeigen" aus, dann wird eine zweite Benutzerdialogseite angezeigt, auf welcher die im Makrospeicher 2c derzeit abgelegten Makros in Form einer Liste dargestellt sind. In dieser Liste kann der Benutzer mittels der Cursortasten der Fernbedienung 3 ein gewünschtes Makro anwählen und dann umprogrammieren oder löschen.

Eine Veränderung des Arbeitsprogrammes des Fernsehempfängers kann auch dadurch erfolgen, dass der Fernsehempfänger nach Eingabe entsprechender Bedienbefehle über den ISDN-Anschluss 7 des Fernsehempfängers und das Internet Kontakt mit der Homepage des Geräteherstellers oder eines Fachhändlers aufnimmt. Ist diese Internetverbindung hergestellt, dann werden die entsprechenden Inhalte der Internetseiten nach vorheriger Decodierung durch den Mikroprozessor 1 oder einen gesonderten Internetdecoder auf dem Display 6 dargestellt. Eine dieser Internetseiten enthält beispielsweise eine Auflistung aller vom Gerätehersteller vertriebenen Fernsehgerätetypen. Wählt der Benutzer den jeweils gewünschten Typ auf der dargestellten Seite aus, dann erfolgt die Darstellung einer weiteren Internetseite des Geräteherstellers, auf welcher alle für diesen Gerätetyp relevanten Hardware- und Softwarebauteile aufgelistet sind. Eines dieser relevanten Bauteile ist das Arbeitsprogramm des Mikroprozessors 1 des Fernsehempfängers. Wird das dem Arbeitsprogramm entsprechende Icon vom Benutzer angewählt, dann erfolgt die Darstellung einer weiteren Internetseite des Geräteherstellers, auf welcher die einzelnen Arbeitsprogramm-Module des Arbeitsprogrammes aufgelistet sind.

Diese Module können in obligatorische Module und fakultative Module unterteilt sein. Obligatorische Module sind für die Funktionsweise des Fernsehempfängers unverzichtbar und können nach einem Herunterladen aus dem Internet nicht verändert werden. Fakultative Module sind beispielsweise Erweiterungsmodule, die den Nutzungskomfort des Fernsehempfängers erhöhen oder Zusatzfunktionen betreffen. Zu diesen fakultativen Modulen gehören beispielsweise Module, die den Bedienungsumfang des Fernsehempfängers betreffen, und Module, die eine elektronische Programmzeitung betreffen. Alle diese Programm-Module, die auch Makros enthalten können, können über das Internet heruntergeladen und zum Ersatz oder zur Ergänzung der im Arbeitsspeicher 2 abgelegten Arbeitsprogramm-Module bzw. Makros verwendet werden.

Eine Umprogrammierung dieser Module seitens des Benutzers kann nur für fakultative Module vorgenommen werden. Obligatorische Module können nur zum Ersatz von jeweils zugehörigen Original-Modulen verwendet werden. Ob ein über das Internet heruntergeladenes Modul lediglich zum Ersatz eines vorhandenen Moduls verwendet werden darf oder ob es auch umprogrammierbar ist und ob es gegebenenfalls auch gelöscht werden darf, wird vom Mikroprozessor 1 anhand der Versionsnummer des Moduls entschieden, die in jedem Modul enthalten ist.

Beim vorstehend beschriebenen Ausführungsbeispiel hat der Benutzer, bei dem es sich um einen Endverbraucher oder um einen Fachhändler handeln kann, die Möglichkeit, eine Veränderung des Arbeitsprogramms der zentralen Steuereinheit eines Fernsehempfängers selbst in die Wege zu leiten und auch zu steuern. Er kann dabei Arbeitsprogramm-Module aus dem Internet herunterladen und in den Arbeitsprogrammspeicher des Fernsehempfängers übertragen. Er hat auch die Möglichkeit, bereits vorhandene Arbeitsprogramm-Module selbst umzuprogrammieren und eigene Arbeitsprogramm-Module zu erstellen, die das bereits vorhandene Arbeitsprogramm ergänzen. Vorzugsweise gehören dem Arbeitsprogramm auch Makros an. Ein Teil dieser Makros ist bereits vom Hersteller des Fernsehgerätes vorgegeben und werkseitig vorprogrammiert. Der Benutzer kann vorhandene Makros umprogrammieren, eigene Makros erstellen und auch Makros wieder löschen.

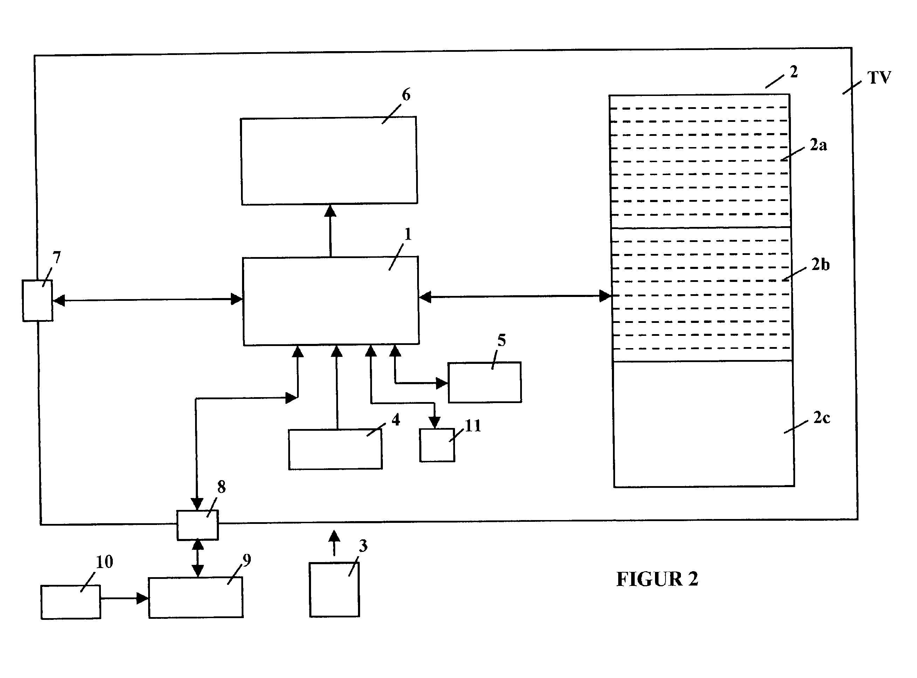

Die Figur 2 zeigt ein zweites Ausführungsbeispiel für die Erfindung. Bei diesem ist insbesondere die Erstellung eigener Arbeitsprogramm-Module und Makros dadurch erleichtert, dass an eine PC-Schnittstelle 8 des Fernsehempfängers ein Personal-Computer 9 angeschlossen ist. Dessen Tastatur 10 erlaubt eine im Vergleich zur Tastatur eines Fernbedienungsgebers wesentlich erleichterte Programmierung. Die mittels der Tastatur 10 und des Personal-Computers 9 erstellten Arbeitsprogramm-Module oder Makros werden über die PC-Schnittstelle 8 dem Fernsehempfänger zugeführt, dort gegebenenfalls im Arbeitsspeicher 5 zwischengespeichert und nach einer Plausibilitätsprüfung seitens des Mikroprozessors 1 in den Arbeitsspeicher 2 übertragen und dort nichtflüchtig abgespeichert. Das vor dieser Abspeicherung neuer Arbeitsprogramm-Module im Arbeitsprogrammspeicher 2 enthaltene komplette Arbeitsprogramm wird vor der Abspeicherung der neuen Arbeitsprogramm-Module in einem Hintergrundspeicher 11 des Fernsehempfängers abgespeichert, so dass bei fehlerhaften neuen Arbeitsprogramm-Modulen wieder auf die vorher vorhandene fehlerfreie Version des Arbeitsprogrammes zurückgegriffen werden kann.

### Bezugszeichenliste

- TV: Fernsehempfänger
- 1: Mikroprozessor
- 2: Arbeitsprogrammspeicher
- 2a: vorprogrammierter Teil des Arbeitsprogrammspeichers
- 2b: freier Teil des Arbeitsprogrammspeichers
- 2c: Makrospeicher
- 3: Fernbedienungsgeber
- 4: Fernbedienempfänger
- 5: RAM
- 6: Display
- 7: Telekommunikationsanschluss (ISDN)
- 8: PC-Schnittstelle
- 9: PC
- 10: Tastatur
- 11: Hintergrundspeicher

## Patentansprüche

1. Vorrichtung mit einem Fernsehempfänger, welcher einen Mikroprozessor und einen mit dem Mikroprozessor verbundenen nichtflüchtigen Arbeitsprogrammspeicher aufweist,
**dadurch gekennzeichnet, dass**
sie weiterhin Benutzereingabemittel (3; 3, 9, 10) aufweist, die zu einer Einleitung und einer benutzergesteuerten Durchführung einer Veränderung des Arbeitsprogrammes des Mikroprozessors (1) verwendbar sind.

2. Vorrichtung nach Anspruch 1,
**dadurch gekennzeichnet, dass**
der Arbeitsprogrammspeicher (2) eine Vielzahl von Speicherbereichen aufweist und das Arbeitsprogramm aus Arbeitsprogramm-Modulen besteht, die in belegten Speicherbereichen (2a) des Arbeitsprogrammspeichers (2) abgespeichert sind.

3. Vorrichtung nach Anspruch 2,
**dadurch gekennzeichnet, dass**
der Arbeitsprogrammspeicher (2) außer den belegten Speicherbereichen freie Speicherbereiche (2b) aufweist, die zur Abspeicherung zusätzlicher Arbeitsprogramm-Module vorgesehen sind.

4. Vorrichtung nach einem der vorhergehenden Ansprüche,
**dadurch gekennzeichnet, dass**
die Benutzereingabemittel zu einer Modifikation vorhandener Arbeitsprogramm-Module und/oder einer Erstellung zusätzlicher Arbeitsprogramm-Module vorgesehen sind.

5. Vorrichtung nach einem der vorhergehenden Ansprüche,
**dadurch gekennzeichnet,dass**
die Benutzereingabemittel die Tastatur (10) eines Personal-Computers (9) sind.

6. Vorrichtung nach einem der vorhergehenden Ansprüche,
**dadurch gekennzeichnet, dass**
die Benutzereingabemittel die Fernbedienung (3) des Fernsehempfängers sind.

7. Vorrichtung nach einem der vorhergehenden Ansprüche,
**dadurch gekennzeichnet, dass**
der Fernsehempfänger einen Makrospeicher (2c) aufweist, in welchem Makros abgespeichert sind, und mit einem Makrospracheninterpreter (1) versehen ist, mittels dessen ausgewählte Makros in Steuersignale umgesetzt werden.

8. Vorrichtung nach Anspruch 7,
**dadurch gekennzeichnet, dass**
der Makrospeicher (2c) mit werkseitig vorgegebenen Makros vorprogrammiert ist.

9. Vorrichtung nach Anspruch 8
**dadurch gekennzeichnet, dass**
die Benutzereingabemittel zu einer Auswahl werkseitig vorgegebener Makros, zu einer Eingabe neuer Makros und zu einer Löschung von Makros vorgesehen sind.

10. Vorrichtung nach Anspruch 9,
**dadurch gekennzeichnet, dass**
auf einem Display (6) die Makrobefehlsauswahl, die Eingabe neuer Makrobefehle und die Makrobefehlslöschung unterstützende Benutzerdialogseiten darstellbar sind.

11. Vorrichtung nach einem der vorhergehenden Ansprüche,
**dadurch gekennzeichnet, dass**
die Auslösung eines Makros ereignisgesteuert erfolgt.

12. Vorrichtung nach einem der vorhergehenden Ansprüche,
**dadurch gekennzeichnet, dass**
der Fernsehempfänger (TV) mit einem ISDN-Anschluss (7) versehen ist, einen Internetdecoder aufweist und zum Herunterladen gewünschter Arbeitsprogramm-Module aus dem Internet vorgesehen ist.

13. Vorrichtung nach einem der vorhergehenden Ansprüche,
**dadurch gekennzeichnet, dass**
der Fernsehempfänger (TV) einen Hintergrundspeicher (11) aufweist, in welchen vor einer Veränderung des im Arbeitsprogrammspeicher (2) hinterlegten Arbeitsprogrammes das im Arbeitsprogrammspeicher (2) hinterlegte Arbeitsprogramm übertragen wird.
